# EUROPEAN PATENT SPECIFICATION

(11) **EP 1 025 364 B1**
(45) Date of publication and mention of the grant of the patent: **07.12.2005**
(21) Application number: 99953369.8
(22) Date of filing: 20.05.1999
(51) Int. Cl.: F04F 5/42, F04F 5/46

(54) **CYCLONIC EJECTION PUMP**
ZYKLON EJEKTIONS PUMPE
POPME A EJECTION CYCLONIQUE

(30) Priority: 25.05.1998 NL 1009256
(43) Date of publication of application: 09.08.2000
(73) Proprietor: Beerlings, Scipio Pieter Sjoerd, 1817 EP Alkmaar (NL)
(72) Inventor: Beerlings, Scipio Pieter Sjoerd, 1817 EP Alkmaar (NL)
(86) International application number: PCT/NL1999/000318
(87) International publication number: WO 1999/061802

(56) References cited:
- FR-A- 589 909
- US-A- 1 842 940
- US-A- 3 857 651
- US-A- 4 430 046

## Description

The invention relates to a multiple large debit ejection pump according to claim 1, wherein the ejectors are fitted in between the blades of a turbine wheel. A pump according to the preamble of claim 1 is described in US4430046. Radial injection takes care for rotation which remains maintained also by special positioning of the exhaust diffusion pressure cone, being mounted such as to provide a certain angle between its longitudinal centre-line with regard to the turbine radius perpendicular to the tangent-line. In this manner inside the inlet nozzle (diametrically relatively being spacious dimensioned) an artificial cyclone is generated, sucking and evacuating the pertaining medium. If applied for pumping powdery or granular material, a gaseous motive power is used, for example dry air. For liquids normally steam shall be applied for said purpose. Gases can be pumped accordingly with advance because of the possibility to evacuate and to pressurize, for which purpose normally steam or gas is used, but a concentrated jet of water is also applicable. One thing and another depends mainly on the nature of the medium under consideration. As long as the radial injection on the turbine blades remains maintained, feed for the rotating ejectors is also available, preventing the pressurated medium from flowing back. Considered as such the cyclonic ejection pump according to the invention can be described as a check valve. Fully automatic control can be obtained by a pressure controlled feed back system. The cyclonic ejection pump according to the invention is especially suited for power stations, more specificly those who derive their energy primary from oceanic thermal energy conversion. By means of the invention the evaporators can be evacuated near to full vacuüm. It shall be clear that the pump as described lands itself for all those applications whereby a high capacity must be combined with heating, for example occuring when in a certain system high viscose liquids are used. One embodiment of the invention shall be explained by way of example, with reference to the accompanying drawings, wherin:
Fig. 1 represents a diagram of a power station combined with an installation for potable water supply.
Fig. 2 represents a cross section of the actual cyclonic ejection pump.

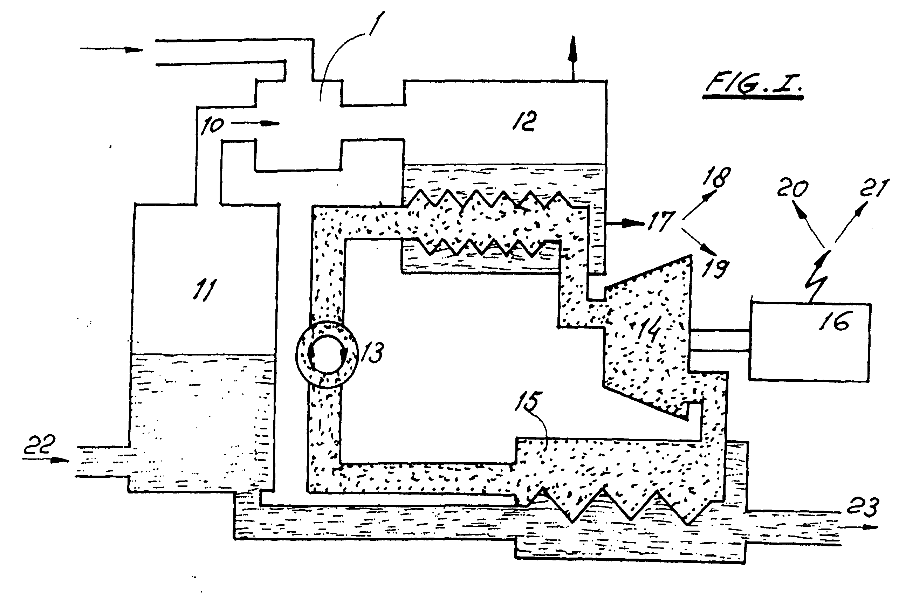

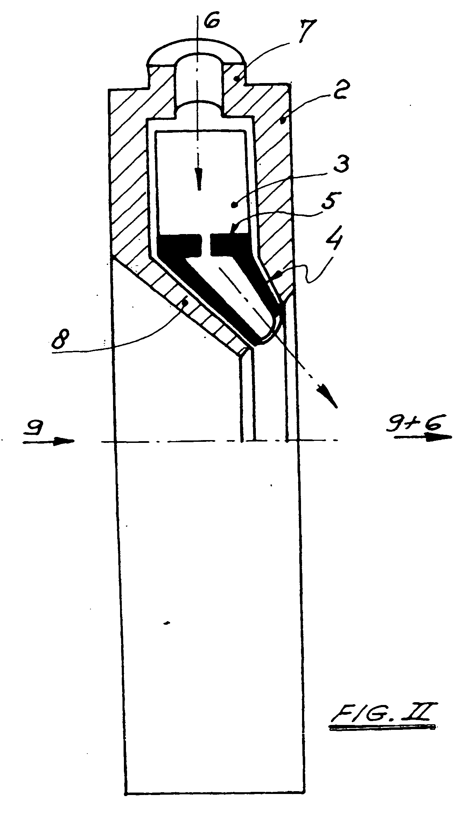

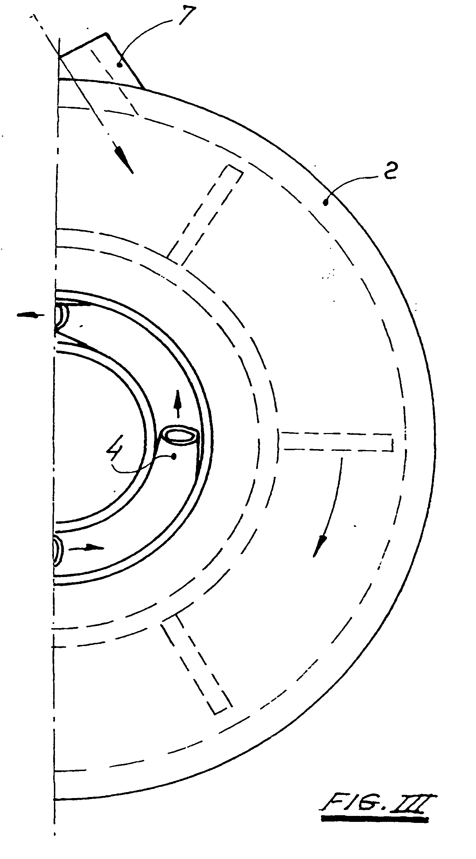

Fig. 3 represents a side view of the pump. Essentially the cyclonic ejection pump 1 according to the invention is composed from a stator 2 and a rotor 3, being jointed to the jets 4. The jets 4 are moulded or welded to the rim 5 of the rotor 3. The motive power 6, being a medium specially adapted to the purpose - for example steam - is radially supplied by nozzle 7. The stator 2 is internally provided with a moulded converging compartment 8, protecting the ejectors 4 from wearing due to the material flow 9. The oceanic thermal energy conversion system as shown in fig. 1 presents an integral application example of the pump according the the invention. The vapour 10 of the salt water evaporator 11 is pumped to condensor 12. The supply pump 13 takes care for circulation in the circuit of turbine 14, in which, apart form condensor 12 a condensor 15 is included. The generator 16 is driven by turbine 14. Condenser 12 - essentially being an heat-exchanger - provides condens 17, partly utilized as boiler suppletion water 18 and potable water 19. The generator 16 provides for electricity supply to distribution station 20 and the boiler installation 21 producing the required steam for pump 1.

## Claims

1. Cyclonic ejection pump designed for large debits, having the ejectors fitted inbetween the blades of a turbine wheel,
**characterized in that** radial injection is causing rotation, while this rotation remains maintained also due special positioning of the exhaust diffusion pressure cone, being arranged such as to provide a certain angle between its longitudinal centre line with regard to the turbine radius, perpendicular to the tangent-line. The aforementioned device keeps the rotation going even when the applicated motive power should be supplied axially to the blades of the turbine wheel. During rotation a strong cyclonic functioning exists, causing and keeping up a stable material flow.

2. Cyclonic ejection pump designed for large debits according to claim 1,
**characterized in that** the pump is made from ceramic material, apart from increased heat resistance causing a film with a thickness depending on the motive power medium used, resulting in wearing decrease because of its natural lubrication property, hence having a centripetal effect to the rotor.

3. Cyclonic ejection pump designed for large debits according to claim 1,
**characterized in that** the pump is part of a pneumatic transport system adapted to the requirements for product flows which are lead through a perforated pipe concentrically mounted inside a larger pipe, the latter intended for dust transport to the separator.

4. Cyclonic ejection pump designed for large debits according to claim 1,
**characterized in that** the described system is adapted to pumping of oil and so functioning consisting of several stages in order to avoid hammering.

5. Cyclonic ejection pump designed for large debits according to claim 1,
**characterized in that** the pump according to the invention is linked inbetween a turbine and a condensor in order to reduce the enthalpic wastage.

6. Cyclonic ejection pump designed for large debits according to claim 1,
**characterized in that** the working pressure is increased such as to meet the requirements for a jet-engine, hence the possibility to increase ignition pressure because the resulting temperature rise does not harm the installation.

7. Cyclonic ejection pump designed for large debits according to claim 1,
**characterized in that** several of those pumps are serially connected to a pump unit intended for hydrogen fired steam turbines, which system makes boilers superfluous.

8. Cyclonic ejection pump designed for large debits according to claim 1,
**characterized in that** the pump is functioning as described and as a vacuum-pump as well, especially used in a cycle system for energy generating and the production of potable water from saline water.

## Patentansprüche

1. Zyklon-Ejektionspumpe für große Lasten, bei der die Ejektoren zwischen den Schaufeln eines Turbinenrads angeordnet sind,
**dadurch gekennzeichnet, dass**
eine radiale Einspritzung eine Drehung bewirkt, während diese Drehung auch aufgrund der speziellen Positionierung des Abgas-Diffusions-Druckkonus beibehalten wird, welcher derart angeordnet ist, dass ein spezifischer Winkel zwischen seiner längsverlaufenden Mittellinie relativ zu dem orthogonal zu der Tangente verlaufenden Turbinenradius gebildet ist; die vorgenannte Vorrichtung bewirkt eine gleichmäßig Drehung, auch wenn die aufgebrachte Antriebsenergie axial auf die Schaufeln des Turbinenrads aufgebracht wird; bei der Drehung besteht eine starke Zyklonwirkung, die einen stabilen Materialfluss bewirkt und aufrechterhält.

2. Zyklonen-Ejektionspumpe für große Lasten nach Anspruch 1, **dadurch gekennzeichnet, dass** die Pumpe aus Keramikmaterial hergestellt ist, das neben der größeren Wärmebeständigkeit bewirkt, dass ein Film mit einer Dicke, die von dem verwendeten Antriebsenergiemedium abhängt, geblidet wird, der aufgrund seiner natürlichen Schmiereigenschaft zu einem geringeren Verschleiß führt und somit einen zentripetalen Effekt auf den Rotor ausübt.

3. Zyklonen-Ejektionspumpe für große Lasten nach Anspruch 1, **dadurch gekennzeichnet, dass** die Pumpe Teil eines pneumatischen Transportsystems ist, das an die Anforderungen der Materialströme angepasst ist, die durch ein perforiertes Rohr geleitet werden, welches konzentrisch in einem größeren Rohr angeordnet ist, wobei letzteres für den Staubtransport zu dem Abscheider vorgesehen ist.

4. Zyklonen-Ejektionspumpe für große Lasten nach Anspruch 1, **dadurch gekennzeichnet, dass** das beschriebene System zum Pumpen von Öl vorgesehen ist und der Betrieb mehrere Stufen umfasst, um ein Hämmern zu vermeiden.

5. Zyklonen-Ejektionspumpe für große Lasten nach Anspruch 1, **dadurch gekennzeichnet, dass** die erfindungsgemäße Pumpe zwischen einer Turbine und einem Kondensator geschaltet ist, um den Enthalpleverlust zu reduzieren.

6. Zyklonen-Ejektionspumpe für große Lasten nach Anspruch 1, **dadurch gekennzeichnet, dass** der Arbeitsdruck derart erhöht wird, dass die Anforderungen hinsichtlich eines Düsentriebwerks erfüllt werden, wobei die Möglichkeit besteht, den Zünddruck zu erhöhen, da der auftretende Temperaturanstieg die Anlage nicht beeinträchtigt.

7. Zyklonen-Ejektionspumpe für große Lasten nach Anspruch 1, **dadurch gekennzeichnet, dass** mehrere dieser Pumpen in Reihe geschaltet sind, um eine Pumpeneinhelt für wasserstoffbetriebene Dampfturbinen zu bilden, wodurch bei diesem System keine Kessel erforderlich sind.

8. Zyklonen-Ejektionspumpe für große Lasten nach Anspruch 1, **dadurch gekennzeichnet, dass** die Pumpe wie beschrieben und auch als Vakuumpumpe arbeitet, die insbesondere in einem Krelslaufsystem für Energieerzeugung und Herstellung von Trinkwasser aus Salzwasser verwendet wird.

## Revendications

1. Pompe à éjection cyclonique conçue pour de grands débits, ayant les éjecteurs montés entre les aubes d'une roue de turbine,
**caractérisée en ce que** l'injection radiale entraîne la rotation, tandis que cette rotation reste conservée également du fait du positionnement spécial du cône de pression de diffusion d'échappement, qui est agencé de telle façon à définir un certain angle entre son axe longitudinal par rapport au rayon de la turbine, perpendiculaire à la ligne de tangence. Le dispositif mentionné ci-dessus conserve la rotation même quand la puissance motrice appliquée doit être fournie axialement aux aubes de la roue de turbine. Pendant la rotation, un fonctionnement cyclonique fort existe, entraînant et entretenant un écoulement de matière stable.

2. Pompe à éjection cyclonique conçue pour de grands débits selon la revendication 1,
**caractérisée en ce que** la pompe est réalisée en un matériau céramique, à part la résistance thermique augmentée provoquant un film ayant une épaisseur dépendant du milieu de puissance motrice utilisé, entraînant une diminution de l'usure du fait de sa propriété naturelle de lubrification, et de là ayant un effet centripète par rapport au rotor.

3. Pompe à éjection cyclonique conçue pour de grands débits selon la revendication 1,
**caractérisée en ce que** la pompe fait partie d'un système de transport pneumatique adapté aux exigences pour des écoulements de produits qui sont amenés à travers un tuyau perforé monté concentriquement à l'intérieur d'un tuyau plus grand, ce dernier étant destiné à transporter de la poussière vers le séparateur.

4. Pompe à éjection cyclonique conçue pour de grands débits selon la revendication 1,
**caractérisée en ce que** le système décrit est prévu pour pomper de l'huile et à fonctionner en étant composé de plusieurs étages de façon à éviter le cognement.

5. Pompe à éjection cyclonique conçue pour de grands débits selon la revendication 1,
**caractérisée en ce que** la pompe selon l'invention est placée entre une turbine et un condenseur de façon à réduire la déperdition enthalpique.

6. Pompe à éjection cyclonique conçue pour de grands débits selon la revendication 1,
**caractérisée en ce que** la pression de travail est augmentée de façon à satisfaire les exigences d'un moteur à réaction, de là la possibilité d'augmenter la pression d'allumage du fait que l'élévation de température résultante ne nuit pas à l'installation.

7. Pompe à éjection cyclonique conçue pour de grands débits selon la revendication 1,
**caractérisée en ce que** plusieurs de ces pompes sont reliées en série à une unité de pompage destinée aux turbines à vapeur allumées par hydrogène, lequel système rend les chaudières superflues.

8. Pompe à éjection cyclonique conçue pour de grands débits selon la revendication 1,
**caractérisée en ce que** la pompe fonctionne de la manière décrite et comme une pompe à vide également, spécialement utilisée dans un système cyclique pour engendrer de l'énergie et pour la production d'eau potable à partir d'eau de mer.
